# FASCICULE DE BREVET EUROPEEN

(11) **EP 0 499 508 B1**
(45) Date de publication et mention de la délivrance du brevet: **21.12.1994**
(21) Numéro de dépôt: 92400284.3
(22) Date de dépôt: 04.02.1992
(51) Int. Cl.: B62D 1/18, F16B 2/18

(54) **Dispositif de colonne de direction pour véhicule automobile**
Lenksäulen-Anordnung für ein Kraftfahrzeug
Steering column arrangement for an automotive vehicle

(30) Priorité: 15.02.1991 FR 9101841
(43) Date de publication de la demande: 19.08.1992
(73) Titulaire: NACAM, F-41100 Vendôme (FR)
(72) Inventeur: Haldric, Bernard, F-41100 Vendome (FR); Foulquier, Jacques, F-41100 Vendome (FR); Blais, Jean René, F-41100 Vendome (FR)
(74) Mandataire: Phélip, Bruno

(56) Documents cités:
- EP-A- 0 192 776
- EP-A- 0 368 700
- DE-B- 2 431 883
- FR-A- 2 491 024
- US-A- 4 733 575

## Description

La présente invention se rapporte à un dispositif de colonne de direction pour véhicule automobile et elle concerne plus particulièrement des colonnes de direction qui sont réglables verticalement.

L'invention porte plus particulièrement sur un dispositif de colonne de direction constitué par un corps de colonne assemblé, dans lequel un tube-corps supporte, par l'intermédiaire de deux paliers, l'axe-volant de direction.

Il est connu de raccorder ce tube-corps aux éléments du châssis par différents systèmes de liaison qui permettent un réglage vertical de cette direction. Les dispositifs les plus récents concernent des pattes solidarisées de part et d'autre de ce tube-corps dans un plan passant par l'axe du volant, ces pattes recevant chacune un plot élastique, dans lequel se monte un boulon de fixation sur le châssis. Ces deux plots élastiques matérialisent ainsi un axe virtuel d'articulation sensiblement horizontal et qui passe par le plan de l'axe-volant. On peut ainsi régler verticalement le volant de direction en le déplaçant angulairement par rapport à cet axe virtuel d'articulation. On connaît également d'autres dispositifs, dans lesquels un tourillon est fixé de chaque côté du tube-corps, de manière à ce qu'il matérialise un axe virtuel d'articulation, qui est sensiblement perpendiculaire à l'axe du volant, et qui est situé dans son plan. Chacun de ces tourillons est monté dans un palier qui est fixé sur le châssis. On peut également dans ce cas régler angulairement le volant de direction en tournant autour de cet ce virtuel d'articulation.

On connaît également un tube de colonne de direction décrit dans le brevet US-A-4.733.575 (correspondant au préambule de la revendication 1) qui comporte un tube-corps en deux parties, le tube inférieur ayant un axe de pivotement, et le tube supérieur étant supporté par des moyens de tenue avec un débattement axial et muni d'un système de réglage en hauteur.

Ces types de dispositifs présentent l'inconvénient de n'offrir qu'un seul axe virtuel d'articulation, qui est situé dans le plan de l'axe du volant. De ce fait, ces dispositifs entraînent des contraintes de montage, qui sont difficilement compatibles avec la mise en place des directions dans les véhicules automobiles modernes, où l'encombrement est un inconvénient majeur. De plus, ces systèmes sont relativement complexes et d'un poids assez élevé, ce qui augmente d'autant le prix de réalisation de ces ensembles.

Le but de l'invention est d'éviter les inconvénients mentionnés ci-dessus et de proposer un dispositif de colonne de direction pour véhicule automobile, qui soit réglable verticalement en tournant angulairement autour d'un axe, qui puisse être disposé librement par rapport au plan passant par l'axe du volant, et qui soit d'une conception la plus simple possible afin de diminuer au maximum le prix de fabrication.

Ce but est atteint grâce aux caractéristiques définies dans la partie caractérisante de la revendication 1.

Selon un mode de réalisation de l'invention, les moyens de tenue vers son extrémité avant sont des moyens de tenue souples angulairement par rapport à un axe transversal et sensiblement horizontal d'articulation, et les moyens de tenue vers l'extrémité arrière du tube-corps sont des moyens de tenue souples angulairement par rapport à un axe transversal et sensiblement horizontal d'articulation. Il faut noter que les moyens de tenue vers l'extrémité arrière, qui permettent le débattement angulaire de moyen des lumières, ne sont pas obligatoirement des moyens de tenue souples. Plus particulièrement, les moyens de tenue vers l'extrémité avant sont constitués par une patte inférieure, et les moyens de tenue vers l'extrémité arrière sont constitués par une patte supérieure.

Avantageusement, le montant transversal est de plus muni d'un support à sa partie inférieure, qui est incliné par rapport au plan de ce montant transversal et qui se termine par une extrémité sensiblement parallèle au plan de ce montant transversal. Cette extrémité est solidarisée avec l'extrémité avant du tube-corps au moyen d'une soudure par exemple. De plus, la semelle possède des trous de fixation recevant des boulons, de manière à la bloquer sur un élément du châssis.

Selon un mode particulier de l'invention, cette patte inférieure peut être réalisée à partir d'une même tôle qui est pliée et découpée, de façon à obtenir la semelle et le montant avec son support et son extrémité.

Dans la configuration de l'invention, la patte supérieure est constituée par un montant transversal, qui se prolonge par une semelle disposée perpendiculairement et, qui est relié au châssis du véhicule par des moyens de fixation. Le montant transversal est relié à l'extrémité arrière du tube-corps, et il est relativement souple, de manière qu'il puisse se déplacer angulairement par rapport à l'axe transversal et sensiblement horizontal d'articulation, qui est sensiblement l'axe de jonction de ce montant transversal avec la semelle. Le montant transversal, qui se prolonge d'une part par la semelle, est d'autre part muni d'une ouverture centrale qui débouche à la partie inférieure. Cette ouverture centrale a un côté gauche et un côté droit qui se prolongent par une joue sensiblement perpendiculaire au plan dudit montant transversal, c'est-à-dire qu'il y a une joue gauche pour le côté gauche, et une joue droite pour le côté droit.

Afin d'obtenir le système de débattement vertical selon l'invention, chacune de ces joues gauche et droite comportent une lumière, qui ont chacune un axe sensiblement circulaire par rapport à l'axe transversal et sensiblement horizontal d'articulation des moyens de tenue souples vers l'extrémité avant du tube-corps. Le débattement vertical est obtenu par la tige d'un boulon qui coulisse dans chacune de ces lumières.

Selon l'invention, le moyen de fixation est constitué par le boulon du débattement vertical et vient bloquer la patte supérieure sur un étrier aménagé sur le tube-corps.

Avantageusement, cet étrier est constitué par un fond, qui est raccordé de chaque côté par un montant gauche et un montant droit. Ces montants sont soudés respectivement au tube-corps, de manière que les montants soient sensiblement verticaux, chacun de ces montants ayant un trou correspondant, qui sont disposés en face l'un par rapport à l'autre, de façon à matérialiser l'axe de montage du boulon de fixation du système de blocage.

Le dispositif de colonne de direction pour véhicule automobile selon l'invention présente ainsi l'avantage d'avoir un axe virtuel d'articulation sensiblement horizontal, qui a une position indifférente par rapport au plan passant par l'axe de la colonne de direction, ce qui permet d'avoir un réglage vertical correct de la direction, tout en pouvant s'adapter à toutes les architectures rencontrées dans les véhicules modernes. De plus, cette grande simplicité permet d'obtenir un prix de revient extrêmement réduit tout en garantissant une grande fiabilité.

D'autres avantages ressortiront de l'invention, qui sera mieux comprise à l'aide de la description donnée ci-dessous d'exemples particuliers de réalisation, décrits à titre non limitatif en référence aux dessins annexés sur lesquels :
- la figure 1 est une vue longitudinale de l'ensemble du dispositif de colonne de direction pour véhicule automobile selon l'invention ;
- la figure 2 est une coupe suivant II-II de la figure 1 ;
- la figure 3 est une vue en perspective de l'ensemble de la patte inférieure selon l'invention ;
- la figure 4 est une vue de face de la tôle constituant la patte inférieure représentée sur la figure 3 ;
- la figure 5 est une vue en perspective de la patte supérieure.

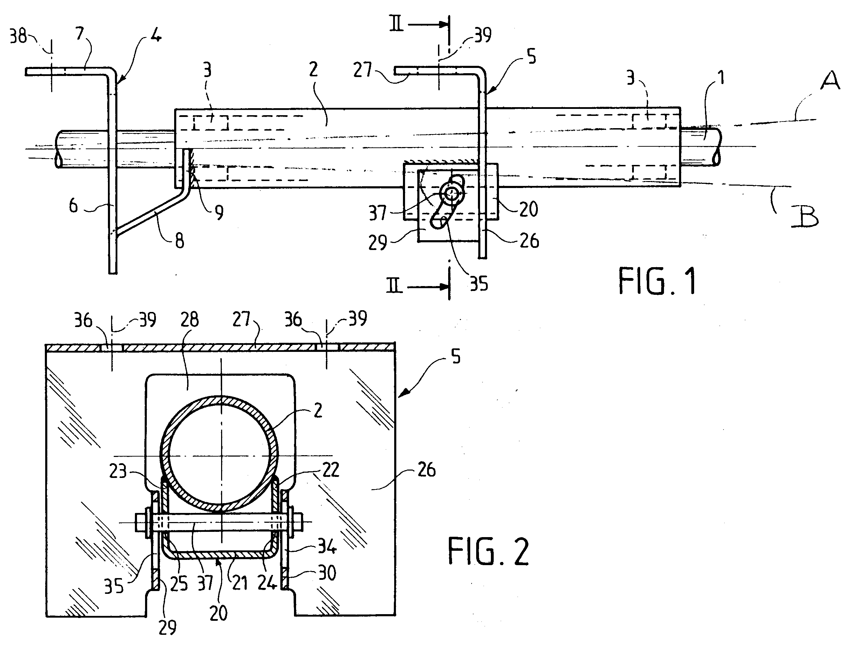

Le dispositif de colonne de direction pour véhicule automobile selon l'invention est représenté sur la figure 1 et comporte un axe-volant 1 qui est monté dans un tube-corps 2 par l'intermédiaire de deux paliers 3. Ces deux paliers 3 sont disposés sensiblement à chacune des extrémités de ce tube-corps 2. D'autre part, ce tube-corps 2 est supporté par des moyens de tenue disposés vers l'extrémité avant de ce tube-corps 2, et par des moyens de tenue disposés vers l'extrémité arrière de ce même tube-corps 2. Les moyens de tenue disposés vers l'extrémité avant du tube-corps 2 sont des moyens de tenue souples angulairement par rapport à un axe transversal et sensiblement horizontal d'articulation, et ils sont réalisés sous la forme d'une patte inférieure 4. Les moyens de tenue disposés vers l'extrémité arrière du tube-corps 2 sont des moyens de tenue souples angulairement par rapport à un axe transversal et sensiblement horizontal d'articulation, et ils sont réalisés sous la forme d'une patte supérieure 5. Cette patte supérieure 5 est de plus munie d'un système de débattement vertical, de manière à placer le volant à la position verticale voulue lors du réglage en position de la colonne de direction. Lorsque la position verticale de ce volant est choisie, il est maintenu en place par un système de blocage.

Afin de pouvoir réaliser ce système de débattement vertical ainsi que le système de blocage, le tube-corps 2 possède un étrier 20 qui est situé à sa partie inférieure, vers son extrémité arrière, c'est-à-dire dans la zone de la patte supérieure 5. Comme on peut le voir sur la figure 2, l'étrier 20 est constitué par un fond 21 sensiblement horizontal, qui est raccordé à chacune de ces extrémités de chaque côté par un montant gauche 23, et par un montant droit 22, qui sont l'un et l'autre sensiblement verticaux. Chacun de ces montants droit 22 et gauche 23 sont soudés respectivement au tube-corps 2 dans sa partie inférieure, près du plan passant par l'axe de la colonne de direction. Le montant droit 22 est muni d'un trou 24, et le montant gauche 23 est également muni d'un trou 25, ces trous 24 et 25 sont disposés en face l'un par rapport à l'autre, de manière à matérialiser un axe de montage du système de débattement vertical et du système de blocage.

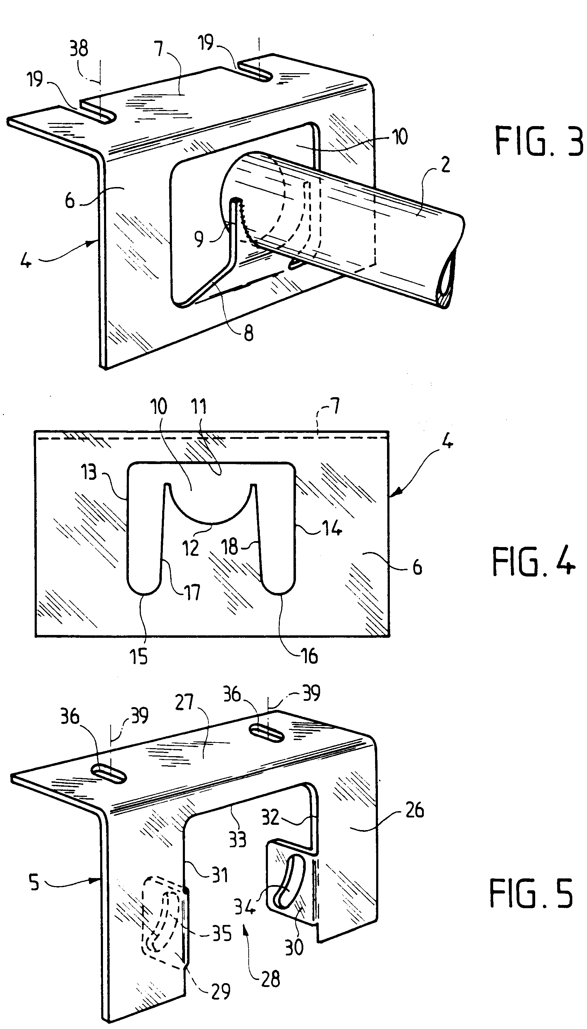

Comme on peut le voir sur les figures 3 et 4, ainsi que sur la figure 1, la patte inférieure 4 est constituée par un montant transversal 6, qui se prolonge par une semelle 7 disposée perpendiculairement. Cette semelle 7 est reliée au châssis du véhicule par des moyens de fixation, tandis que le montant transversal 6 est relié à l'extrémité avant du tube-corps 2. Ce montant transversal 6 est relativement souple, de manière qu'il puisse se déplacer angulairement par rapport à un axe transversal et sensiblement horizontal d'articulation, qui est sensiblement l'axe de jonction du montant transversal 6 avec la semelle 7. La patte inférieure 4 a son montant transversal 6 qui se prolonge d'une part par la semelle 7, et qui est muni d'autre part d'un support 8 à sa partie inférieure. Ce support 8 est incliné par rapport au plan du montant transversal 6, et il se termine par une extrémité 9 sensiblement parallèle au plan de ce montant transversal 6. L'extrémité 9 est solidarisée avec l'extrémité avant du tube-corps 2 au moyen d'une soudure, et la semelle 7 possède des trous de fixation 19 permettant d'amarrer la patte inférieure 4 au châssis du véhicule par des boulons 38.

Un mode de réalisation de la patte inférieure 4 est représenté sur la figure 4, où l'on voit que cette patte inférieure 4 est constituée à partir d'une seule tôle pliée et découpée. Cette tôle possède une découpe 10 qui a un contour constitué par un côté externe supérieur 11 sensiblement parallèle au bord inférieur de la tôle, et par deux côtés externes : un côté externe gauche 13 et un côté externe droit 14, qui sont sensiblement perpendiculaires au côté externe supérieur 11. Chacun des côtés externes se prolonge par un arrondi : le côté externe gauche 13 se prolonge par un arrondi inférieur gauche 15, et le côté externe droit 14 se prolonge par un arrondi inférieur droit 16. Chacun de ces arrondis sont raccordés d'autre part à des côtés internes : un côté interne gauche 17 raccordé à l'arrondi inférieur gauche 15, et un côté interne droit 18 raccordé à l'arrondi inférieur droit 16. Chacun de ces côtés internes sont respectivement sensiblement parallèles aux côtés externes, c'est-à-dire que le côté interne gauche 17 est sensiblement parallèle au côté externe gauche 13, et que le côté interne droit 18 est sensiblement parallèle au côté externe droit 14. Enfin, l'extrémité du côté interne gauche 17 est raccordée à l'extrémité du côté interne droit 18 par un côté demi-circulaire concave 12, dont le diamètre est adapté au diamètre extérieur du tube-corps 2. Cette partie de tôle, représentée par le demi-côté circulaire concave 12 et les côtés interne gauche 17 et interne droit 18, est ensuite pliée suivant une ligne qui raccorde les deux arrondis inférieurs gauche 15 et droit 16, de manière à l'écarter du plan du montant transversal 6, comme cela est représenté sur les figures 3 et 1, et enfin l'extrémité 9 est pliée de manière que son plan soit sensiblement parallèle au plan du montant transversal 6. La tôle est également pliée suivant un axe correspondant au côté supérieur du montant transversal 6, et qui correspond sensiblement à l'axe transversal et sensiblement horizontal d'articulation. Le tube-corps 2 peut ensuite être placé dans le demi-côté circulaire concave 12, de manière que l'extrémité 9 soit soudée sur ce tube-corps 2.

Comme on peut le voir sur les figures 1, 2 et 5, la patte supérieure 5 est constituée par un montant transversal 26, qui se prolonge par une semelle 27 disposée perpendiculairement. Cette semelle 27 est reliée au châssis du véhicule par des moyens de fixation, et le montant transversal 26 est relié à l'extrémité arrière du tube-corps 2. Le montant transversal 26 est relativement souple, de manière qu'il puisse se déplacer angulairement par rapport à un axe transversal et sensiblement horizontal d'articulation, qui est sensiblement l'axe de jonction de ce montant transversal 26 avec la semelle 27 fixée sur le châssis du véhicule. Comme on peut le voir sur la figure 5, la patte supérieure 5 a son montant transversal 26, qui se prolonge d'une part par la semelle 27, et qui est munie d'autre part d'une ouverture 28 centrale qui débouche à la partie inférieure. Cette ouverture centrale 28 a un côté gauche 31 et un côté droit 32, qui sont raccordés par un côté supérieur 33. Le côté gauche 31 et le côté droit 32 sont sensiblement perpendiculaires au côté inférieur du montant transversal 26, et le côté supérieur 33 est sensiblement parallèle à ce même bord inférieur. De plus, cette ouverture centrale 28 se prolonge de chaque côté par une joue qui est sensiblement perpendiculaire au plan du montant transversal 26. La patte supérieure 5 est ainsi munie d'une joue gauche 29 pour le côté gauche 31 de l'ouverture centrale 28, et d'une joue droite 30 pour le côté droit 32 de cette même ouverture centrale 28. De plus, la joue gauche 29 possède une lumière 35, et la joue droite 30 possède une lumière 34.

Les lumières 34 et 35 sont ainsi situées dans des plans sensiblement parallèles à l'axe de la colonne de direction, et elles constituent le système de débattement vertical de cette direction. Pour cela, chacune des lumières 34 et 35 a un axe, qui est sensiblement circulaire par rapport à l'axe transversal et sensiblement horizontal d'articulation des moyens de tenue souples vers l'extrémité avant du tube-corps 2, c'est-à-dire de la patte inférieure 4. Les lumières 34 et 35, qui sont disposées l'une en face de l'autre, reçoivent un boulon de fixation 37, qui pénètre également dans le trou 24 du montant 22 de l'étrier 20, et dans le trou 25 du montant 23 de ce même étrier 20. Ainsi, l'ensemble de la colonne de direction selon l'invention peut se débattre librement dans le sens vertical par l'intermédiaire de la tige du boulon de fixation 37, qui coulisse dans chacune des lumières 34 et 35.

Lorsque le volant est à la position verticale voulue, celle-ci est maintenue par le système de blocage qui est constitué par un moyen de fixation réalisé par le boulon 37, qui vient serrer la joue gauche 29 contre le montant 23, et la joue droite 30 contre le montant 22, afin de bloquer la patte supérieure 5 sur l'étrier 20 du tube-corps 2.

Ainsi, le dispositif selon l'invention permet un débattement vertical du volant, qui est en fait un déplacement angulaire de l'axe-volant 1 entre deux positions extrêmes A et B, comme cela est représenté sur la figure 1.

Enfin, selon l'invention, la patte inférieure 4 et la patte supérieure 5 peuvent être en un matériau métallique ou en un matériau plastique.

## Revendications

1. Dispositif de colonne de direction pour véhicule automobile comportant un axe-volant (1) monté dans un tube-corps (2) par l'intermédiaire de deux paliers (3) disposés sensiblement à chacune des extrémités de ce tube-corps (2), qui est supporté par des moyens de tenue vers son extrérmité avant et par des moyens de tenue vers son extrémité arrière, lesdits moyens de tenue situés vers l'extrémité arrière étant munis d'un système de débattement vertical, de manière à placer le volant à la position verticale voulue, qui est maintenue par un système de blocage caractérisé en ce que:
- le tube-corps (2) est supporté vers son extrémité avant par des moyens de tenue souples, qui comportent une patte inférieure (4) ayant un montant transversal (6), se prolongeant par une semelle (7) disposée perpendiculairement, qui est reliée au châssis du véhicule par des moyens de fixation, le montant transversal (6) étant relié à l'extrémité avant du tube-corps (2), et étant relativement souple, de manière qu'il puisse se déplacer angulairement par rapport à un axe transversal et sensiblement horizontal d'articulation, qui est sensiblement l'axe de jonction du montant transversal (6) avec la semelle (7),

2. Dispositif selon la revendication 1, caractérisé en ce que le tube-corps (2) est supporté vers son extrémité arrière par des moyens de tenue souples angulairement par rapport à un axe transversal et sensiblement horizontal d'articulation, qui a une position quelconque par rapport à l'axe-volant (1).

3. Dispositif selon l'une des revendications 1 et 2, caractérisé en ce que les moyens de tenue sont en matériau métallique.

4. Dispositif selon l'une des revendications 1 et 2, caractérisé en ce que les moyens de tenue sont en matériau plastique.

5. Dispositif selon l'une des revendications 2 à 4, caractérisé en ce que les moyens de tenue du tube-corps (2) vers l'extrémité arrière comportent une patte supérieure (5), ayant un montant transversal (26), se prolongeant par une semelle (27) disposée perpendiculairement, qui est reliée au châssis du véhicule par des moyens de fixation, le montant transversal (26) étant relié à l'extrémité arrière du tube-corps (2), et étant relativement souple de manière qu'il puisse se déplacer angulairement par rapport à un axe transversal et sensiblement horizontal d'articulation, qui est sensiblement l'axe de jonction de ce montant transversal (26) avec la semelle (27).

6. Dispositif selon l'une quelconque des revendications précédentes, caractérisé en ce que le système de débattement vertical comporte au moins une lumière (34, 35) aménagée dans les moyens de tenue disposés vers l'extrémité arrière du tube-corps (2), cette lumière (34, 35) étant située dans le plan sensiblement parallèle à l'axe de la colonne de direction, et ayant un axe sensiblement circulaire par rapport à l'axe transversal et sensiblement horizontal d'articulation des moyens de tenue souples vers l'extrémité avant du tube-corps (2).

7. Dispositif selon l'une quelconque des revendications précédentes, caractérisé en ce que le système de blocage comporte au moins un moyen de fixation, qui solidarise le tube-corps (2) avec les moyens de tenue disposés vers l'extrémité arrière du tube-corps (2).

8. Dispositif selon la revendication 7, caractérisé en ce que les moyens de fixation comportent un boulon (37).

9. Dispositif selon la revendication 4, caractérisé en ce que la patte inférieure (4) a son montant transversal (6), qui se prolonge d'une part par la semelle (7), et qui est muni d'un support (8) à sa partie inférieure, ce support (8) étant incliné par rapport au plan dudit montant transversal (6), et se terminant par une extrémité (9) sensiblement parallèle au plan dudit montant transversal (6), cette extrémité (9) étant solidaire avec l'extrémité avant du tube-corps (2), la semelle (7) possédant des trous de fixation (19).

10. Dispositif selon la revendication 9, caractérisé en ce que des boulons (38) se montent dans les trous de fixation (19).

11. Dispositif selon la revendication 9, caractérisé en ce que le support (8) est solidarisé avec le tube-corps (2) par soudure, le support (8) étant réalisé à partir de la tôle constituant ledit montant transversal (6), la patte inférieure (4) étant constituée par une seule tôle pliée et découpée.

12. Dispositif selon la revendication 5 et l'une quelconque des revendications 6 à 8, caractérisé en ce que la patte supérieure (5) a son montant transversal (26), qui se prolonge d'une part par la semelle (27), et qui est muni d'une ouverture (28) centrale débouchant à la partie inférieure, dont chacun des côtés gauche (31) et droit (32) se prolonge par une joue sensiblement perpendiculaire au plan dudit montant transversal (26), c'est-à-dire une joue gauche (29) pour le côté gauche(31) et une joue droite (30) pour le côté droit (32), chacune de ces joues (29) et (30) possédant la lumière (35) et (34) correspondante, qui est destinée à recevoir le boulon de fixation (37) du tube-corps (2).

13. Dispositif selon la revendication 12, caractérisé en ce que le tube-support (2) possède un étrier (20) constitué par un fond (21) raccordé de chaque côté par un montant gauche (23) et un montant droit (22), ces montants (22) et (23) étant soudés respectivement au tube-corps (2), de manière que les montants (22) et (23) soient sensiblement verticaux, chacun de ces montants (22) et (23) ayant un trou correspondant (24) et (25), qui sont disposés en face l'un par rapport à l'autre, de manière à matérialiser un axe de montage du boulon de fixation (37).

## Claims

1. Automotive vehicle steering column comprising a steering shaft (1) mounted in an outer steering column tube (2) by means of two bearings (3) disposed substantially at either end of this outer steering column tube (2), which is supported by retention means at its front end, and by retention means at its rear end, the retention means at its rear end being provided with a vertical clearance system, so as to place the steering wheel in the required vertical position, which is maintained by a locking system, characterised in that the outer steering column tube (2) is supported at its front end by resilient retention means, comprising a lower bracket (4) having a transverse upright (6) extending in the form of a flange (7) disposed perpendicularly, which is connected to the vehicle chassis by attachment means, the transverse upright (6) being connected to the front end of the outer steering column tube (2) and being relatively resilient, such that it can be displaced angularly relative to a transverse, substantially horizontally articulated shaft which is substantially the shaft joining the transverse upright (6) to the flange (7).

2. Device according to Claim 1, characterised in that the outer steering column tube (2) is supported at its rear end by resilient retention means, at an angle relative to a transverse, substantially horizontally articulated shaft, which may be in any position relative to the steering shaft (1).

3. Device according to either of Claims 1 or 2, characterised in that the retention means are made of metal.

4. Device according to either of Claims 1 or 2, characterised in that the retention means are made of plastics material.

5. Device according to any of Claims 2 to 4, characterised in that the retention means of the outer steering column tube (2) at the rear end comprise an upper bracket (5) having a transverse upright (26) extending in the form of a flange (27) disposed perpendicularly, which is connected to the vehicle chassis by attachment means, the transverse upright (26) being connected to the front end of the outer steering column tube (2) and being relatively resilient, such that it can be displaced angularly relative to a transverse, substantially horizontally articulated shaft which is substantially the shaft joining this transverse upright (26) to the flange (27).

6. Device according to any one of the preceding Claims, characterised in that the vertical clearance system comprises at least one slot (34,35) provided in the retention means disposed at the rear end of the outer steering column tube (2), this slot (34,35) being arranged in a plane substantially parallel to the steering column shaft, and having a substantially circular axis relative to the transverse, substantially horizontally articulated shaft of the resilient retention means towards the front end of the outer steering column tube (2).

7. Device according to any one of the preceding Claims, characterised in that the locking system comprises at least one attachment means which joins the outer steering column tube (2) integrally with the retention means disposed at the rear end of the outer steering column tube.

8. Device according to Claim 7, characterised in that the attachment means comprise a bolt (37).

9. Device according to Claim 4, characterised in that the lower bracket (4) has a transverse upright (6) which extends on one side into the form of the flange (7), and on its lower part is provided with a support (8), this support (8) being inclined relative to the plane of the said transverse upright (6), and terminating in an end (9) substantially parallel to the plane of the said transverse upright (6), this end (9) being integral with the front end of the outer steering column tube (2), and the flange (7) thereof having attachment holes (19).

10. Device according to Claim 9, characterised in that bolts (38) are fitted in the attachment holes (19).

11. Device according to Claim 9, characterised in that the support (8) is joined integrally by welding to the outer steering column tube (2), the support (8) being formed from the sheet metal which constitutes the said transverse upright (6), and the lower bracket (4) consisting of a single bent and cut metal sheet.

12. Device according to Claim 5 and any one of Claims 6 to 8, characterised in that the upper bracket (5) has a transverse upright (26), is extended on one side by the flange (27), and is provided with a central aperture (28) opening into the lower part, of which the left-hand side (31) and the right-hand side (32) are each extended by a side flange substantially perpendicular to the plane of the said transverse upright (26), ie a left side flange (29) for the left-hand side (31) and a right side flange (30) for the right-hand side (32), each of these side flanges (29) and (30) having a corresponding slot (35) and (34) for accommodating the attachment bolt (37) of the outer steering column tube (2).

13. Device according to Claim 12, characterised in that the outer steering column tube (2) has a clamping device (20) consisting of a base part (21) connected on either side by a left-hand upright (23) and a right-hand upright (22), these uprights (22) and (23) being welded to the outer steering column tube (2) such that the uprights (22) and (23) are substantially vertical, each of these uprights (22) and (23) having a corresponding hole (24) and (25) disposed opposite one another, thus forming a mounting shaft for the attachment bolt (37).

## Patentansprüche

1. Lenksäulenanordnung für Kraftfahrzeuge, mit einer Lenkradachse (1), die in einem Rohrkörper (2) mittels zweier Lager (3) montiert ist, die im wesentlichen an den Enden des Rohrkörpers (2) angeordnet sind, der durch Halterungs- und Führungseinrichtungen im Bereich seines vorderen und im Bereich seines hinteren Endes abgestützt ist, wobei die Halterungs- und Führungseinrichtungen am hinteren Ende mit einem vertikalen Federungssystem versehen sind, derart, daß man das Lenkrad in einer gewünschten vertikalen Position anordnen kann, die durch ein Blockiersystem beibehalten wird, dadurch gekennzeichnet, daß der Rohrkörper (2) im Bereich seines vorderen Endes durch nachgiebige Halterungs- und Führungseinrichtungen abgestützt ist, die eine untere Klaue (4) umfassen, die eine Querträgerplatte (6) aufweist, die sich in einen rechtwinklig verlaufenden Flansch (7) verlängert, der durch Befestigungsmittel mit dem Chassis des Fahrzeugs verbunden ist, wobei die Querträgerplatte (6), die mit dem Rohrkörper (2) am vorderen Ende verbunden ist, relativ nachgiebig ist, derart, daß sie um eine transversale und im wesentlichen horizontale Gelenkachse schwenken kann, die der Verbindungskante der Querträgerplatte (6) mit dem Flansch (7) entspricht.

2. Lenksäulenanordnung nach Anspruch 1, dadurch gekennzeichnet, daß der Rohrkörper (2) an seinem hinteren Ende durch Halterungs- und Führungseinrichtungen abgestützt ist, die in Bezug auf eine transversale und im wesentlichen horizontale Gelenkachse, die eine beliebige Position bezüglich der Lenkradachse (1) aufweist, winkelig nachgiebig sind.

3. Lenksäulenanordnung nach Anspruch 1 oder 2, dadurch gekennzeichnet, daß die Halterungs- und Führungseinrichtungen aus Metall bestehen.

4. Lenksäulenanordnung nach Anspruch 1 oder 2, dadurch gekennzeichnet, daß die Halterungs- und Führungseinrichtungen aus plastischem Material bestehen.

5. Lenksäulenanordnung nach einem der Ansprüche 2 bis 4, dadurch gekennzeichnet, daß die Halterungs- und Führungseinrichtungen des Rohrkörpers (2) am hinteren Ende eine Klaue (5) umfassen, die eine Querträgerplatte (26) aufweist, die sich in einen rechtwinklig verlaufenden Flansch (27) verlängert, der durch Befestigungsmittel mit dem Fahrzeugchassis verbunden ist, wobei die Querträgerplatte (26) mit dem hinteren Ende des Rohrkörpers (2) verbunden ist und relativ nachgiebig in der Weise ausgebildet ist, daß sie um eine transversale und im wesentlichen horizontale Achse schwenken kann, die im wesentlichen der Verbindungskante der Querträgerplatte (26) mit dem Flansch (27) entspricht.

6. Lenksäulenanordnung nach einem der Ansprüche 1 bis 5, dadurch gekennzeichnet, daß das vertikale Federungssystem wenigstens ein Langloch (34, 35) im Bereich der Halterungs- und Führungseinrichtungen am hinteren Ende des Rohrkörpers (2) aufweist, wobei dieses Langloch (34, 35) in einer im wesentlichen parallel zur Achse der Lenksäule verlaufenden Ebene liegt und einen in Bezug auf die transversale und im wesentlichen horizontale Gelenkachse der nachgiebigen Halterungs- und Führungseinrichtungen am vorderen Ende des Rohrkörpers kreisförmigen Bogen bildet.

7. Lenksäulenanordnung nach einem der Ansprüche 1 bis 6, dadurch gekennzeichnet, daß das Blockiersystem wenigstens ein Fixierorgan aufweist, welches den Rohrkörper (2) mit den Halterungs- und Führungseinrichtungen am hinteren Ende des Rohrkörpers (2) fest verbindet.

8. Lenksäulenanordnung nach Anspruch 7, dadurch gekennzeichnet, daß das Fixierorgan eine Durchsteckschraube (37) aufweist.

9. Lenksäulenanordnung nach Anspruch 4, dadurch gekennzeichnet, daß die untere Klaue (4) an der Querträgerplatte (6), die sich in einem Flansch (7) fortsetzt, am unteren Abschnitt mit einer Abstützung (8) versehen ist, die gegenüber der Ebene der Querträgerplatte (6) geneigt ist und in einen Endabschnitt (9) ausmündet, der im wesentlichen parallel zur Ebene der Querträgerplatte (6) verläuft, wobei dieser Endabschnitt (9) fest mit dem vorderen Ende des Rohrkörpers (2) verbunden ist und wobei der Flansch Befestigungsausnehmungen (19) aufweist.

10. Lenksäulenanordnung nach Anspruch 9, gekennzeichnet durch die Befestigungsausnehmungen (19) durchsetzende Schrauben (38).

11. Lenksäulenanordnung nach Anspruch 9, dadurch gekennzeichnet, daß die Abstützung (8) mit dem Rohrkörper (2) durch Schweißen verbunden ist, wobei die Abstützung (8) aus dem Blechteil, welches die Querträgerplatte (6) bildet, herausgebogen ist, so daß die untere Klaue (4) aus einem einzigen gestanzten und gewinkelten Blechteil besteht.

12. Lenksäulenanordnung nach Anspruch 5 und einem der Ansprüche 6 bis 8, dadurch gekennzeichnet, daß die obere Klaue (5) eine Querträgerplatte (26) aufweist, an der einerseits der Flansch (27) angeformt ist und die mit einer nach unten hin offen ausmündenden zentralen Ausnehmung (28) versehen ist, wobei sowohl an der linken (31) als auch an der rechten (32) Seite der Öffnung angeformte, im wesentlichen senkrecht zur Ebene der Querträgerplatte (26) verlaufende Seitenwangen vorgesehen sind, und zwar eine linke Seitenwange (29) für die linke Seitenkante (31) und eine rechte Seitenwange (30) für die rechte Seitenkante (32), wobei jede Seitenwange (29 und 30) ein entsprechendes Langloch (35 bzw. 34) aufweist, welches dazu bestimmt ist, die Befestigungsschraube (37) des Rohrkörpers (2) aufzunehmen.

13. Lenksäulenanordnung nach Anspruch 12, dadurch gekennzeichnet, daß das Rohrstück (2) einen Bügel (20) aufweist, der aus einem Basisabschnitt (21) und einem jeweils an seinem Ende abgewinkelten linken Schenkel (23) und rechten Schenkel (22) besteht, wobei die Schenkel (22, 23) am Rohrkörper (2) derart angeschweißt sind, daß die Schenkel (22, 23) im wesentlichen vertikal verlaufen und jeder Schenkel (22, 23) eine Ausnehmung (24 bzw. 25) aufweist, die einander derart gegenüber liegen, daß sie eine Montageachse für die Befestigungsschraube (37) bilden.
